# EUROPÄISCHE PATENTANMELDUNG

(11) **EP 1 431 139 A1**
(43) Veröffentlichungstag der Anmeldung: **23.06.2004**
(21) Anmeldenummer: 02718724.4
(22) Anmeldetag: 14.03.2002
(51) Int. Cl.: B60R 25/00

(54) **KRAFTFAHRZEUGSCHUTZVORRICHTUNG**

(30) Priorität: 28.05.2001 RU 2001114570
(71) Anmelder: Smirnov, Boris Leonidovich, Syktyvkar, 167001 (RU)
(72) Erfinder: Smirnov, Boris Leonidovich, Syktyvkar, 167001 (RU)
(74) Vertreter: Gleiss & Grosse
(86) Internationale Anmeldenummer: PCT/RU2002/000090
(87) Internationale Veröffentlichungsnummer: WO 2002/096726

(57) **Zusammenfassung**

Der vorgeschlagene Kraftfahrzeug-Schutzkomplex erlaubt es, das Kraftfahrzeug gegen Diebstahl dadurch zu sichern, dass darin ein Mechanismus zur Neigung des Fahrersitzes nach hinten und zu dessen Fixierung in dieser Position und ein Mechanismus zum automatischen Betätigen der Handhaltebremse, um die Türen aus dem Inneren des Fahrgastraumes zu verschließen, vorgesehen sind. Beim Ansprechen des Mechanismus zur Neigung des Fahrersitzes nach hinten sperrt das unter einem Winkel gehobene Sitzpolster den Zugang zum Vordersitz und die nach hinten geneigte Rückenlehne den Zugang zum Hecksitz. Gleichzeitig mit der Neigung des Fahrersitzes nach hinten spricht der Mechanismus zum automatischen Betätigen der Handhaltebremse und der Mechanismus zum Verschließen der Türen aus dem Inneren des Fahrgastraumes an. Der Mechanismus zur Neigung des Fahrersitzes nach hinten wird im Innenteil des Sitzpolsters montiert und ist aus diesem Grund zum Bruch schwer zugänglich. Ein ähnlicher Mechanismus kann auch in den vorderen Fahrgastsitz eingebaut werden, was den Diebstahlsicherungsgrad noch mehr erhöhen wird.

## Beschreibung

### Technisches Gebiet

Die Erfindung betrifft den Kraftfahrzeugbau, insbesondere einen Schutzkomplex zur Sicherung eines Kraftfahrzeuges gegen Diebstahl.

### Stand der Technik

Zur Zeit bestehende Systeme und Einrichtungen zur Sicherung eines Kraftfahrzeuges gegen Diebstahl durch Einbau von Schutzsignalisationen und Diebstahlsicherungssystemen umfassen verschiedene mechanische, elektronische und andere Einrichtungen.

Es ist z.B. ein Verfahren zur Sicherung eines Kraftfahrzeuges gegen Diebstahl durch Einbau des Schutzsystems "Stalker" (MS-450) der Firma Magius Systems Ltd. (www.magicsys.spb.ru) bekannt. Das Schutzsystem ist mit einer Raubsicherungskarte versehen, die, wenn diese sich bei dem Fahrer befindet, die Steuerung des Diebstahlsicherungssystems in einer Entfernung beeinflussen und den Motor des Kraftfahrzeuges, das entführt wird, stillsetzen kann.

Es ist ein Verfahren zur Sicherung durch Einbau eines mechanischen Diebstahlsicherungssystems "Krab" bekannt (Zeitschrift "Za ruljom", Nr. 8/98, S. 276), wo die Betätigungsstangen des Getriebes in der Position "Rückwärtsgang" blockiert werden.

In den beiden Fällen kann der Dieb in den Fahrgastraum an die Stelle des Fahrers eindringen, den Kupplungsfusshebel treten und das Kraftfahrzeug entführen, indem er ein Zugfahrzeug benutzt, ohne den Motor zu starten.

### Darstellung der Erfindung

Die Aufgabe der vorliegenden Erfindung ist es, ein einfaches, kostengünstiges und wirkungsvolles Verfahren zur Sicherung eines Kraftfahrzeuges gegen Diebstahl zu schaffen.

Das technische Ergebnis wird dadurch erreicht, dass die Sicherung eines Kraftfahrzeuges gegen Diebstahl durch Neigung des Fahrersitzes nach hinten und durch dessen Fixierung in dieser Position erfolgt. In dieser Position des Sitzes sperrt das unter einem Winkel angeordnete Polster den Zugang zum Vordersitz und die geneigte Rückenlehne sperrt den Zugang zum Hecksitz.

Dabei wirkt der Fahrersitz auf den Handbremshebel ein und das Kraftfahrzeug wird auf die Handhaltebremse gestellt. Gleichzeitig erfolgt das Verschließen der Türen aus dem Inneren des Fahrgastraumes.

### Kurze Beschreibung der Zeichnungen

Die Erfindung wird nachfolgend anhand von Ausführungsbeispielen unter Bezugnahme auf die Zeichnungen erläutert. Es zeigen:
Fig. 1a - den Fahrersitz in der gewöhnlichen Position,
Fig. 1b - den Fahrersitz in der Position der Erfüllung der
Schutzfunktion,
Fig. 2a - den Fahrersitz mit dem Handbremshebel in der gewöhnlichen Position,
Fig. 2b - den Fahrersitz mit dem Handbremshebel in der Position der Erfüllung der Schutzfunktion,
Fig. 2c - den Fahrersitz mit dem Handbremshebel nach der Abnahme des Kraftfahrzeuges vom Schutz,
Fig. 2d - den Fahrersitz mit dem Handbremshebel in der gewöhnlichen Position in Ansicht von hinten,
Fig. 3a - Schließelement der Türen in der Transportposition des Fahrersitzes,
Fig. 3b - Verschließelement der Türen beim Stellen des Kraftfahrzeugs unter Schutz.

### Bester Weg zur Ausführung der Erfindung

Der Kraftfahrzeug-Schutzkomplex umfasst einen Mechanismus zur Neigung des Fahrersitzes nach hinten, zu dessen Fixierung in dieser Position sowie einen Mechanismus zum automatischen Betätigen der Handhaltebremse.

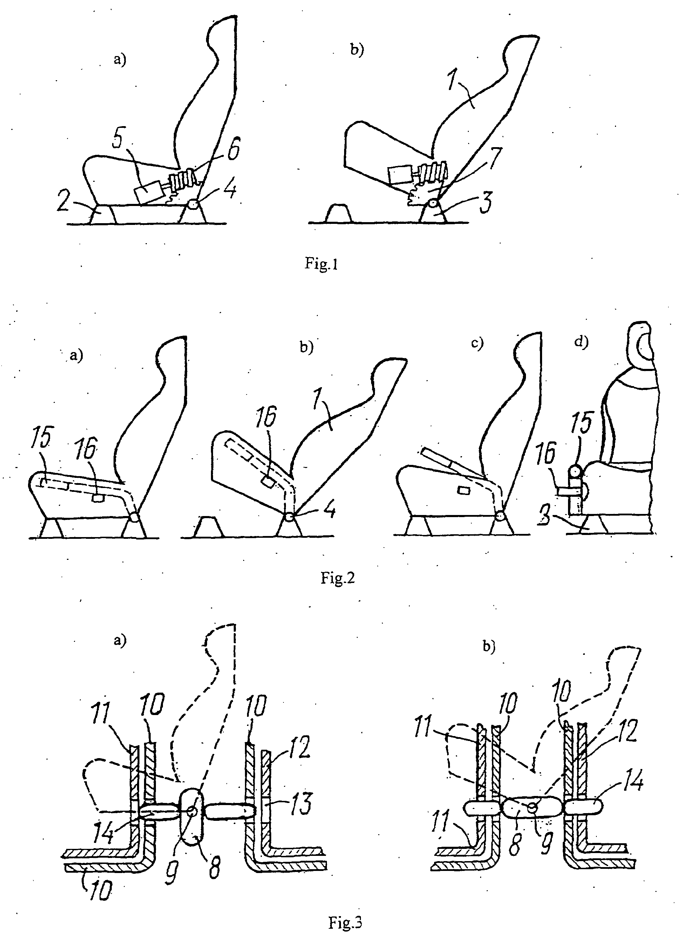

In Fig. 1a,1b ist ein Mechanismus zur Neigung des Fahrersitzes 1 nach hinten gezeigt, der im Innenteil des Sitzpolsters montiert wird und aus diesem Grund zum Bruch schwer zugänglich ist. Der Fahrersitz 1 stützt sich an Stützen, insbesondere an Vorder- und Hinterstützen 2 bzw. 3 ab. Die Hinterstützen 3 und der Sitz 1 weisen eine Gelenkverbindung mit einer Achse 4 auf. Der eigentliche Mechanismus zur Neigung des Sitzes 1 besteht aus einem am Seitenteil des Sitzpolsters gelagerten reversieven Elektromotors 5, einer Schnecke 6 und einem an der Hinterstütze 3 befestigten Zahnsegment 7.

In Fig. 2a-d ist ein Mechanismus zur Betätigung einer Handhaltebremse 15 gezeigt, der eine Stange 16 aufweist, die am Seitenteil des Sitzpolsters befestigt und unterhalb des Handbremshebels angeordnet ist.

Der Kraftfahrzeug-Schutzkomplex kann auch einen Mechanismus zum Verschließen der Türen aus dem Inneren des Fahrgastraumes aufweisen, was die Sicherung des Kraftfahrzeuges gegen Diebstahl erheblich erhöht.

In Fig. 3a-b ist ein Mechanismus zum Verschließen der Türen des Kraftfahrzeuges von innen gezeigt, der einen Nocken 8 aufweist, der auf einer Achse 9 gelagert ist, die über eine Verbindungsmuffe (nicht gezeigt) mit der Achse 4 der Gelenkverbindung des Sitzes 1 mit der Stütze 3 verbunden ist. Der Nocken 8 ist mit Bolzen 14 zusammenwirkbar, die bei nicht verschlossenen Türen im inneren unteren Teil des Karosseriezentralpfostens 10 angeordnet ist. An der hinteren Stirnseite 11 der Vordertür und an der vorderen Stirnseite 12 der Hintertür wie auch im Karosseriezentralpfosten 10 sind koaxiale Öffnungen 13 vorhanden, in denen die Bolzen 14 verschiebbar sind.

Der erfindungsgemäße Kraftfahrzeug-Schutzkomplex arbeitet folgenderweise.

Nach dem Ausstieg des Fahrers aus dem Kraftfahrzeug neigt sich sein Sitz 1 unter Verwendung eines elektrischen Antriebes mit einem Schneckengetriebe mittels dessen Verbindung mit den Hinterstützen 3 nach hinten (Fig. 1) . Dabei läuft der am Seitenteil des Sitzpolsters befestigte Elektromotor 5, indem er die Schnecke 6 dreht, auf das mit der Hinterstütze 3 des Sitzes 1 verbundene Zahnsegment 7 auf und neigt den Sitz 1 nach hinten. Das zur Neigung des Sitzes verwendbare Schneckenpaar dient gleichzeitig als Sperre, die die Rückkehr des Sitzes in die gewöhnliche Position verhindert. Die Rückkehr des Sitzes in die Transportposition ist nur beim Einschalten des Elektromotors in die umgekehrte Richtung möglich.

Gleichzeitig wirkt bei der Neigung des Sitzes nach hinten (Fig. 1a) die Achse 4 seiner Gelenkverbindung mit der Stütze 3 über eine Verbindungsmuffe (nicht gezeigt) auf die Achse 9 (Fig. 3a) des Nockens 8 ein, dreht ihn und betätigt die Bolzen 14, die unter Verschiebung in den koaxialen Öffnungen 13 des Karosseriezentralpfostens 10 und der hinteren Stirnseite 11 der Fahrertür sowie der vorderen Stirnseite 12 der Hintertür das Kraftfahrzeug aus dem Inneren des Fahrgastraumes verschließen.

In derselben Zeit bringt der sich nach hinten neigende Sitz 1 den Handbremshebel 15 (Fig. 2b) in die Arbeitsstellung mittels der am Seitenteil des Sitzpolsters befestigten und unterhalb des Handbremshebels 15 angeordneten Stange 16 und stellt das Kraftfahrzeug auf die Handhaltebremse.

Bei der Abnahme des Kraftfahrzeuges vom Schutz kehrt der Sitz 1 in die Ausgangsposition zurück, der Handbremshebel 15 bleibt in der Arbeitsstellung (Fig. 2c), die Bolzen 14 (Fig.3b) werden ins Innere des Karosseriezentralpfostens 10 eingezogen und öffnen die Türen.

Mittels der Verbindungsmuffe kann der Antrieb von der Achse 4 der Gelenkverbindung des Fahrersitzes mit der Stütze 3 zur Achse 9 mit dem Nocken 6 abgeschaltet werden, dann wird der Sitz 1 die Schutzfunktion ohne Verschließen der Türen erfüllen.

Es kann eine Fernsteuerung der Position des Sitzes, d.h. dessen Schutzfunktion, vorgesehen sein.

Im Falle eines Raubangriffs, wenn der Fahrer gezwungen ist, das Kraftfahrzeug zu verlassen, sowie beim Vorhandensein beim Fahrer eines Fernsteuerpultes läßt der Fahrer das Kraftfahrzeug den Dieben, läßt sie eine Strecke zurücklegen und schaltet die Fernsteuerung der Sitzposition ein. Der Fahrersitz neigt sich mittels eines Servoantriebes zusammen mit dem Dieb nach hinten, betätigt den Handbremshebel und stoppt das Kraftfahrzeug. Gleichzeitig erfolgt das Verschließen der Türen von innen. Der Dieb kann das Kraftfahrzeug nur beim abgesenkten Seitenglas der Tür verlassen. (Beim Vorhandensein einer Diebstahlsicherungskarte in der Tasche des Fahrers wird die Schutzfunktion des Sitzes automatisch in Abhängigkeit vom Abstand des Fahrers vom Kraftfahrzeug eingeschaltet).

Die Überführung des Handbremshebels in die neutrale Stellung wie auch das Öffnen der Türen ist nur nach der Rückkehr des Fahrersitzes in die gewöhnliche Position möglich, wenn der Antrieb von der Sitzachse zur Nockenachse nicht abgeschaltet ist.

Derselbe Mechanismus kann auch in der Konstruktion des vorderen Fahrgastsitzes montiert sein. In diesem Fall wird der Zugang zum Fahrgastraum auch auf der anderen Seite begrenzt sein.

In dunkler Tageszeit werden die nach hinten geneigten Sitze einer fremden Person nicht erlauben, sich auf dem Hecksitz des Kraftfahrzeuges zu verbergen.

### Gewerbliche Anwendbarkeit

Die Verwendung der nach hinten neigbaren Vordersitze mit gleichzeitigem Betätigen der Handhaltebremse und Verschließen der Türen aus dem Inneren des Fahrgastraumes erhöht erheblich den Diebstahlsicherungsgrad. Darüber hinaus schafft die schwierige Zugänglichkeit des Sitzneigungsmechanismus und die Unmöglichkeit, sich im Fahrgastraum während der Neutralisierung des Schutzsystems zu befinden, zusätzliche Hindernisse für den Diebstahl des Kraftfahrzeuges.

## Patentansprüche

1. Kraftfahrzeug-Schutzkomplex zur Sicherung eines Kraftfahrzeuges gegen Diebstahl, mit einem Mechanismus zur Neigung des Fahrersitzes und zur dessen Fixierung in dieser Position sowie zur dessen Rückkehr in die Transportposition, wobei das Sitzpolster den Zugang zum Fahrersitz und die Rückenlehne des Sitzes den Zugang zum Hecksitz verhindert, **dadurch gekennzeichnet, dass** zur Neigung der Sitzes (1) nach hinten dieser mit Hinterstützen (3) gelenkig verbunden ist, wobei diese Gelenkverbindung eine Achse (4) aufweist und am Seitenteil des Fahrersitzpolsters eine Stange (16) mit einem Hebel der Handhaltebremse (15) zu dessen Betätigen bei der Überführung des Sitzes (1) in die nach hinten geneigte Position zusammenwirkbar gelagert ist.

2. Kraftfahrzeug-Schutzkomplex nach Anspruch 1, **dadurch gekennzeichnet, dass** der Antrieb zur Neigung und Fixierung des Fahrersitzes als Schneckengetriebe ausgebildet ist, das gleichzeitig ein Sperrelement ist.

3. Kraftfahrzeug-Schutzkomplex nach Anspruch 1, **dadurch gekennzeichnet, dass** er zusätzlich mit einem Mechanismus zum Verschließen der Türen aus dem Inneren des Fahrgastraumes versehen ist, der mit einem Antrieb von der Achse (4) der Gelenkverbindung des Sitzes (1) mit der Hinterstütze (3) über eine Verbindungsmuffe mit einer Achse (9) ausgebildet ist, auf der ein Nocken (8) zum Zusammenwirken mit Bolzen (14) gelagert ist, zu deren Aufnahme in einem Karosseriezentralpfosten (10), einer hinteren Stirnseite (11) der Vordertür und in einer vorderen Stirnseite (12) der Hintertür Öffnungen (13) ausgebildet sind.
